# EUROPÄISCHE PATENTSCHRIFT

(11) **EP 1 511 643 B1**
(45) Veröffentlichungstag und Bekanntmachung des Hinweises auf die Patenterteilung: **28.09.2005**
(21) Anmeldenummer: 03735362.0
(22) Anmeldetag: 07.05.2003
(51) Int. Cl.: B60H 1/03, F24J 3/00

(54) **HEIZVORRICHTUNG FÜR KRAFTFAHRZEUGE**
HEATING DEVICE FOR MOTOR VEHICLES
DISPOSITIF DE CHAUFFAGE POUR DES VEHICULES AUTOMOBILES

(30) Priorität: 24.05.2002 DE 10222947
(43) Veröffentlichungstag der Anmeldung: 09.03.2005
(73) Patentinhaber: Behr GmbH & Co., 70469 Stuttgart (DE)
(72) Erfinder: AUGENSTEIN, Claus, 71229 Leonberg (DE); MAUS, Ralf, 70825 Korntal-Münchingen (DE)
(74) Vertreter: Grauel, Andreas
(86) Internationale Anmeldenummer: PCT/EP2003/004763
(87) Internationale Veröffentlichungsnummer: WO 2003/099596

(56) Entgegenhaltungen:
- DE-A- 19 631 722
- DE-A- 19 906 361
- US-A- 4 501 231

## Beschreibung

Die Erfindung betrifft eine Heizvorrichtung für Kraftfahrzeuge mit einem Verbrennungsmotor und einem Kühlmittelkreislauf nach dem Oberbegriff des Patentanspruches 1.

Derartige Heizvorrichtungen für Kraftfahrzeuge sind als Zusatzheizungen für verbrauchsoptimierte Motoren, die nicht genügend Wärme für die Heizung des Fahrgastraumes zur Verfügung stellen, bekannt, wie zum Beispiel in dem gattungsgemäßen DE 196 31 722 A. Die Wärme, die für die zusätzliche Heizung benötigt wird, kann auf unterschiedliche Weise erzeugt werden, z. B. durch Flüssigkeitsreibung: eine solche Zusatzheizvorrichtung, auch Zuheizer genannt, ist in dem US-Patent 4,993,377 beschrieben. Ein Rotor läuft in einer mit Silikonöl gefüllten Wärmeerzeugungskammer um, die von einem Kühlmantel umgeben ist, und wird über eine Magnetkupplung vom Verbrennungsmotor über einen Riementrieb bedarfsweise angetrieben. Die durch Flüssigkeitsreibung erzeugte Wärme wird an das den Kühlmantel umströmende Kühlmittel abgegeben, das somit in den Kühlmittel- bzw. Heizkreislauf des Kraftfahrzeuges gelangt. Das erwärmte Kühlmittel durchströmt einen Heizkörper, der den Fahrgastraum des Kraftfahrzeuges mit erwärmter Luft versorgt. Die Umwälzung des Kühlmittels durch den Kühlkreislauf und den Heizkreislauf erfolgt durch die vom Verbrennungsmotor angetriebene Kühlmittelpumpe. Die vom Kühlmittel durchströmte Zusatzheizvorrichtung sowie deren Zu- und Ableitungen erhöhen den kühlmittelseitigen Druckverlust des Kühlmittelkreislaufs und erfordern eine stärkere Dimensionierung der Kühlmittelpumpe.

Man hat daher in einer ähnlichen Zusatzheizvorrichtung nach der EP-A 0 361 053 vorgeschlagen, in den Heizungskreislauf eine Zusatzpumpe zur Förderung des Kühlmittels durch die Zusatzheizvorrichtung und den Heizkörper einzubauen. Im Gegensatz zu der Hauptpumpe, die mechanisch vom Motor angetrieben wird, besitzt die zusätzliche Förderpumpe einen elektrischen Antrieb, der das Bordnetz belastet.

Es ist Aufgabe der vorliegenden Erfindung, für eine Heizvorrichtung der eingangs genannten Art den kühlmittelseitigen Druckverlust zu minimieren und kosten- und energieaufwendige Zusatzpumpen zu vermeiden.

Die Lösung dieser Aufgabe ergibt sich aus den Merkmalen des Patentanspruches 1. Durch die Integration eines Pumpenrades in die vom Kühlmittel durchströmte Kühlkammer der Heizvorrichtung wird der kühlmittelseitige Druckabfall dieser Zusatzheizvorrichtung minimiert. Der Antrieb des Pumpenrades erfolgt über die Antriebswelle, auf der auch der Rotor befestigt ist, und weist daher einen günstigen Antriebswirkungsgrad auf. Der konstruktive und kostenmäßige Aufwand für das Pumpenrad ist gering, d. h. es ergeben sich kaum Zusatzkosten für die Heizvorrichtung. Die Anordnung des Pumpenrades in der Kühlkammer lässt außerdem eine strömungsgünstige Durchströmung der Kühlkammer und damit eine effektive Wärmeübertragung an das Kühlmittel zu.

Weitere vorteilhafte Ausgestaltungen der Erfindung ergeben sich aus den Unteransprüchen. Danach ist das Pumpenrad koaxial zur Antriebswelle drehbar auf einer Ausbuchtung des Kühlmantels gelagert, und zwar fluchtend zum Kühlmitteleintrittsstutzen, so dass das Pumpenrad axial angeströmt wird. Kühlkammer und Wärmeerzeugungskammer sind hermetisch voneinander getrennt, der Antrieb von der Antriebswelle auf das Pumpenrad erfolgt daher berührungslos, d. h. magnetisch. Hierfür sind sowohl auf dem Wellenende der Antriebswelle als auch in der Nabe des Pumpenrades Dauermagnete angeordnet, so dass das aufgrund der Rotation der Antriebswelle rotierende Magnetfeld das Pumpenrad mitnimmt. Die Magnetlinien durchdringen dabei die dünne Wandung des nicht magnetisierbaren Materials der Ausbuchtung. Das Pumpenrad kann alternativ auch aus einem magnetisierbaren Kunststoff hergestellt werden, so dass man auf die Bestückung mit Dauermagneten verzichten kann.

In weiterer vorteilhafter Ausgestaltung weisen sowohl der Kühlmantel als auch die Kühlkammer axial ausgerichtete Kühlrippen auf, die spiralförmig angeordnete Kühlkanäle bilden. Dadurch wird eine kontrollierte Kühlmittelströmung vom Kühlmitteleintrittsstutzen über das Pumpenlaufrad radial nach außen bis zum Kühlmittelaustrittsstutzen gewährleistet. Gleichzeitig wird der Kühlmantel, der in Wärmeaustausch mit der Wärmeerzeugungskammer steht, vollflächig vom Kühlmittel umspült, was eine gute Wärmeübertragung bewirkt.

Nach einer vorteilhaften Ausgestaltung der Erfindung ist die Wärmeerzeugungskammer mit einem Silikonöl gefüllt, und die Wärme wird nach dem Prinzip der Flüssigkeitsreibung, d. h. durch Scherung des viskosen Mediums zwischen dem Rotor und dem feststehenden Kühlmantel erzeugt. Diese Art der Wärmeerzeugung für Kraftfahrzeugzusatzheizungen hat sich als vorteilhaft und preiswert erwiesen. Allerdings wäre eine alternative Art der Wärmerzeugung auch denkbar, z. B. durch Wirbelströme.

Ein Ausführungsbeispiel der Erfindung ist in der Zeichnung dargestellt und wird im Folgenden näher beschrieben. Es zeigen
- Fig. 1: die Heizvorrichtung mit integriertem Pumpenrad im Schnitt und
- Fig. 2: eine Ansicht in Richtung X auf das Pumpenrad der Heizvorrichtung.

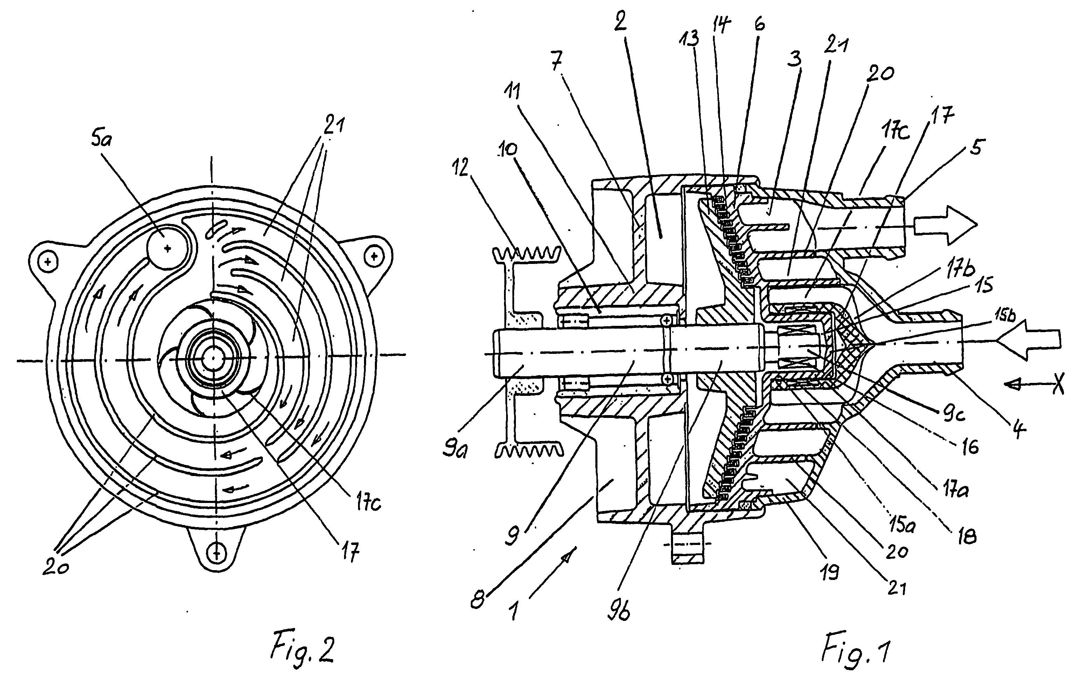

**Fig. 1** zeigt eine Heizvorrichtung für ein nicht dargestelltes Kraftfahrzeug mit einem Verbrennungsmotor, der durch einen ebenfalls nicht dargestellten Kühlmittelkreislauf gekühlt wird. An diesen Kühlmittelkreislauf ist ein ebenfalls nicht dargestellter Heizungskreislauf angeschlossen, in dem sich ein vom Kühlmittel durchströmter Heizkörper für die Beheizung des Fahrgastraumes des Kraftfahrzeuges befindet. Die Heizvorrichtung 1 besteht aus einer Wärmeerzeugungskammer 2 und einer Kühlkammer 3, die über einen Kühlmitteleintrittsstutzen 4 und einen Kühlmittelaustrittsstutzen 5 mit dem Kühlmittelkreislauf des Kraftfahrzeuges verbunden, d. h. in den Heizungsvorlauf oder -rücklauf des Heizkreislaufes eingeschaltet ist. Die Wärmeerzeugungskammer 2 wird begrenzt von einem Kühlmantel 6 und einer Gehäusewand 7 eines Lagergehäuses 8, welches in nicht dargestellter Weise am Motorblock des Kraftfahrzeuges befestigt ist. Eine Antriebswelle 9 ist über ein Wälzlager 10 drehbar in einer Nabe 11 des Lagergehäuses 8 aufgenommen. Ein Wellenende 9a ragt über das Lager 10 hinaus und trägt eine Riemenscheibe 12, die über einen nicht dargestellten Riementrieb mit der Kurbelwelle des Verbrennungsmotors mechanisch verbunden ist. Auf einem in die Wärmeerzeugungskammer 2 hineinragenden Wellenabschnitt 9b ist ein Rotor 13 drehfest befestigt. Bei dem Ausführungsbeispiel in der Zeichnung ist der Rotor 13 auch axial auf der Antriebswelle 9 fixiert - er kann jedoch auch axial verschieblich angeordnet sein. Der Rotor 13 weist auf seiner dem Kühlmantel 6 zugewandten Seite ringförmige Rippen und Nuten auf, die mit entsprechenden ringförmigen Rippen und Nuten des Kühlmantels 6 in Eingriff stehen und einen labyrinthförmigen Arbeitsspalt 14 bilden. Die Wärmeerzeugungskammer 2 ist so weit mit einem viskosen Medium, d. h. Silikonöl bestimmter Zähigkeit gefüllt, dass der Arbeitsspalt 14 ebenfalls mit Silikonöl gefüllt ist. Der Kühlmantel 6 ist drehfest und dicht in das Lagergehäuse 8 eingesetzt und weist in seinem zentralen Bereich eine koaxial zur Antriebswelle 9 ausgerichtete Ausbuchtung 15 auf, die topfförmig ausgebildet ist und einen zylindrischen Teil 15a sowie einen ebenen stirnseitigen Teil 15b aufweist. Der Kühlmantel 6 mit der Ausbuchtung 15 trennt somit hermetisch die mit Silikonöl gefüllte Wärmeerzeugungskammer 2 von der von Kühlmittel durchströmten Kühlkammer 3 ab. Die Antriebswelle 9 ist über den Abschnitt 9b, der den Rotor 13 trägt, in die Ausbuchtung 15 hinein verlängert und bildet dort einen Wellenstummel 9c, auf dessen Umfang Permanentmagnete 16 befestigt sind. Auf dem zylindrischen Teil 15a der Ausbuchtung 15 ist ein Pumpenlaufrad 17 drehbar gelagert; es weist eine Nabe 17a auf, in welcher, über den Umfang verteilt, Permanentmagnete 18 befestigt sind, und zwar radial fluchtend zu den Permanentmagneten 16 auf dem Wellenstummel 9c. Das Pumpenrad 17 ist als Axial/Radial-Laufrad ausgebildet, d. h. es weist einen axialen Anströmbereich 17b und einen radialen Abströmbereich 17c mit entsprechender Radialbeschaufelung auf. Der Kühlraum 3 wird durch den Kühlmantel 6 und einen Gehäusedeckel 19 gebildet, der ebenfalls dicht in das Lagergehäuse 3 eingesetzt ist und die Kühlmitteleintritts- und -austrittstutzen 4, 5 enthält. Innerhalb der Kühlkammer 3 sind ringförmig bis spiralförmig verlaufende Kühlrippen 20 angeordnet, die von innen nach außen etwa spiralförmig verlaufende Kühlkanäle 21 bilden.

**Fig. 2** zeigt eine Ansicht in Richtung X auf den Kühlmantel 6 mit den Kühlrippen 20 und den Kühlkanälen 21, in welchen das vom Pumpenrad 17 geförderte Kühlmittel von innen nach radial außen strömt, was durch Richtungspfeile angedeutet ist. Das Kühlmittel überstreicht somit die gesamte Fläche des Kühlmantels 6, bevor es die Kühlkammer 3 über den Austrittsstutzen 5 verlässt.

Die Funktion der Heizvorrichtung 1 ist die Folgende: wenn die Kühlmitteltemperatur niedrig ist und Heizbedarf für den Fahrgastraum des Kraftfahrzeuges besteht, wird die Heizvorrichtung 1, die wie eingangs erwähnt als Zusatzheizung fungiert, in Betrieb genommen. Dies kann beispielsweise durch eine hier nicht dargestellte, jedoch aus dem Stand der Technik bekannte Elektromagnetkupplung erfolgen, die die Antriebswelle 9 mit der Riemenscheibe 12 verbindet, die ihrerseits mechanisch vom Verbrennungsmotor angetrieben wird. Andererseits ist eine Inbetriebnahme der Heizvorrichtung auch durch hydraulisches Befüllen des Arbeitsraumes möglich. Durch das im Arbeitsspalt 14 befindliche Silikonöl wird infolge der Relativdrehzahl zwischen Rotor 13 und Gehäusemantel 6 Wärme durch Flüssigkeitsreibung erzeugt, die unmittelbar über den Kühlmantel 6 und dessen Kühlrippen 20 an das durch die Kühlkanäle 21 strömende Kühlmittel abgegeben wird. Das aus dem Austrittsstutzen 5 austretende Kühlmittel hat daher eine höhere Temperatur als das durch den Eintrittsstuten 4 eintretende Kühlmittel. Der Wellenstummel 9c und die auf seinem Umfang angeordneten Permanentmagnete 16 laufen synchron mit der Antriebswelle 9 um und erzeugen somit ein rotierendes Magnetfeld, welches den dünnwandigen, nicht magnetisierbaren zylindrischen Teil 15a der Ausbuchtung 15 durchdringt. Dieses rotierende Magnetfeld nimmt die Permanentmagnete 18 in der Nabe 17a des Pumpenrades 17 mit, so dass das Pumpenrad 17- mit leichtem Schlupf gegenüber der Antriebswelle 9 - in Rotation versetzt wird.

Infolge der Drehung des Pumpenrades 17 saugt dieses in axialer Richtung aus dem Kühlmitteleintrittstutzen 4 Kühlmittel an und fördert dieses Kühlmittel radial nach außen in die Kühlkanäle 21, wodurch eine gleichmäßige Überströmung des Kühlmantels 6 gewährleistet ist. Das Kühlmittel gelangt schließlich in den radial außen liegenden Austrittsbereich 5a der Kühlkammer 3 und von dort in den Austrittsstutzen 5. Von diesem gelangt das erwärmte Kühlmittel in den nicht dargestellten Heizungsvorlauf und von dort in den ebenfalls nicht dargestellten Heizkörper, der dann die durch ihn geförderte Luft zur Heizung des Fahrgastraumes erwärmt. Die Umwälzung des Kühlmittels im Heizkreislauf, d. h. die Überwindung der Leitungswiderstände und des Strömungswiderstandes im Kühlraum 3 der Heizvorrichtung 1 erfolgt somit durch das von der Antriebswelle 9 angetriebene Pumpenrad 17. Insofern ist die Hauptkühlmittelpumpe von dieser Förderleistung befreit.

Wenn das Kühlmittel hinreichend erwärmt und kein Heizbedarf mehr besteht, wird die Heizvorrichtung 1 abgeschaltet, beispielsweise durch die eingangs erwähnte Elektromagnetkupplung oder ein hydraulische Entleerung des Arbeitsraumes.

Der Antrieb des Pumpenrades kann prinzipiell auch auf andere Weise, d. h. durch einen nicht magnetischen Antrieb erfolgen, z. B. könnte der Kühlmantel 6 in seinem zentralen Bereich an Stelle der Ausbuchtung 15 einen Durchbruch aufweisen, durch den der Wellenstummel 9c hindurchgeführt und abgedichtet wird. Das Pumpenrad 17 könnte dann direkt auf dem Wellenstummel 9c befestigt werden. Die Permanentmagnete könnten somit entfallen, statt dessen wäre eine Dichtung zur Abdichtung der Antriebswelle 9 gegenüber dem Kühlmantel 6 erforderlich, damit kein Silikonöl aus der Wärmeerzeugungskammer in die Kühlkammer bzw. kein Kühlmittel in die Wärmeerzeugungskammer 2 eindringt.

## Patentansprüche

1. Heizvorrichtung für Kraftfahrzeuge mit einem Verbrennungsmotor und einem Kühlmittelkreislauf, wobei die Heizvorrichtung (1) aus einer Wärmeerzeugungskammer (2) mit einem vom Kühlmittel umströmten Kühlmantel (6) und einem in der Wärmeerzeugungskammer (2) umlaufenden, auf einer Antriebswelle (9) befestigten Rotor (13) besteht und wobei der Kühlmantel (6) Teil einer Kühlkammer (3) mit einem Kühlmitteleintrittsstutzen (4) und einem Kühlmittelaustrittsstutzen (5) ist, **dadurch gekennzeichnet, dass** in der Kühlkammer (3) ein von der Antriebswelle (9) angetriebenes Pumpenrad (17) zur Umwälzung des Kühlmittels angeordnet ist.

2. Vorrichtung nach Anspruch 1, **dadurch gekennzeichnet, dass** der Kühlmantel (6) eine zentrale, koaxial zur Antriebswelle (9) angeordnete Ausbuchtung (15) aufweist, außerhalb welcher das Pumpenrad (17) und innerhalb welcher ein Wellenstummel (9c) der Antriebswelle (9) angeordnet sind.

3. Vorrichtung nach Anspruch 1 oder 2, **dadurch gekennzeichnet, dass** das Pumpenrad (17) magnetisch vom Wellenstummel (9c) antreibbar ist.

4. Vorrichtung nach Anspruch 3, **dadurch gekennzeichnet, dass** auf dem Umfang des Wellenstummels (9c) Dauermagnete (16) befestigt sind.

5. Vorrichtung nach Anspruch 3 oder 4, **dadurch gekennzeichnet, dass** das Pumpenrad (17) eine drehbar auf der Ausbuchtung (15, 15a) gelagerte Nabe (17a) aufweist, in der über den Umfang verteilte Dauermagnete (18) befestigt sind.

6. Vorrichtung nach Anspruch 3 oder 4, **dadurch gekennzeichnet, dass** das Pumpenrad (17) aus einem magnetisierbaren Kunststoff besteht.

7. Vorrichtung nach einem der Ansprüche 1 bis 6, **dadurch gekennzeichnet, dass** das Pumpenrad (17, 17a, 17b) als Axial/Radial-Laufrad ausgebildet und der Kühlmitteleintrittsstutzen (4) koaxial zur Antriebswelle (9) angeordnet ist.

8. Vorrichtung nach einem der Ansprüche 2 bis 7, **dadurch gekennzeichnet, dass** die Ausbuchtung (15, 15a) aus einem nicht magnetisierbaren Material besteht.

9. Vorrichtung nach einem der Ansprüche 1 bis 8, **dadurch gekennzeichnet, dass** die Kühlkammer (3) aus dem Kühlmantel (6) und einem Deckel (19) gebildet und als Wärmeübertrager ausgebildet ist.

10. Vorrichtung nach Anspruch 9, **dadurch gekennzeichnet, dass** der Kühlmantel (6) und/oder der Deckel (19) Kühlrippen (20) aufweisen, die Kühlkanäle (21) für das Kühlmittel bilden.

11. Vorrichtung nach Anspruch 10, **dadurch gekennzeichnet, dass** die Kühlkanäle (21) etwa spiralförmig vom Pumpenrad (17) radial nach außen verlaufen.

12. Vorrichtung nach Anspruch 11, **dadurch gekennzeichnet, dass** der Kühlmittelaustrittstutzen (5) radial außen an der Kühlkammer angeordnet ist.

13. Vorrichtung nach einem der vorhergehenden Ansprüche, **dadurch gekennzeichnet, dass** die Wärmeerzeugungskammer (2) mit einem viskosen Medium gefüllt ist, dass der Rotor (13) mit dem Kühlmantel. (6) mindestens einen Arbeitsspalt (14) bildet, in welchem die Wärme durch Flüssigkeitsreibung erzeugt wird.

## Claims

1. A heating device for motor vehicles having an internal combustion engine and a coolant circuit, the heating device (1) consisting of a heat generation chamber (2) with a cooling jacket (6) around which coolant flows and a rotor (13) which runs around the inside of the heat generation chamber (2) and is fixed to a drive shaft (9), and the cooling jacket (6) forming part of a cooling chamber (3) with a coolant inlet connector (4) and a coolant outlet connector (5),
**characterised in that**
a pump wheel (17) driven by the drive shaft (9) is positioned in the cooling chamber (3) to circulate the coolant.

2. A device in accordance with claim 1,
**characterised in that**
the cooling jacket (6) has a central recess (15) positioned coaxially in relation to the drive shaft (9), outside which is positioned the pump wheel (17) and inside which is positioned a shaft stump (9c) of the drive shaft (9).

3. A device in accordance with claim 1 or 2,
**characterised in that**
the pump wheel (17) can be driven magnetically by the shaft sump (9c).

4. A device in accordance with claim 3,
**characterised in that**
permanent magnets (16) are fixed to the periphery of the shaft stump (9c).

5. A device in accordance with claim 3 or 4,
**characterised in that**
the pump wheel (17) has a hub (17a) mounted on the recess (15, 15a) in such a manner that it is able to rotate, in which are fixed permanent magnets (18) distributed around the periphery.

6. A device in accordance with claim 3 or 4,
**characterised in that**
the pump wheel (17) is made of a magnetisable plastic.

7. A device in accordance with one of claims 1 to 6,
**characterised in that**
the pump wheel (17, 17a, 17b) is designed as an axial/radial wheel and the coolant inlet connector is positioned coaxially in relation to the drive shaft (9).

8. A device in accordance with one of claims 2 to 7,
**characterised in that**
the recess (15, 15a) is made of a non-magnetisable material.

9. A device in accordance with one of claims 1 to 8,
**characterised in that**
the cooling chamber (3) is formed of the cooling jacket (6) and a cover (19) and is designed as a heat exchanger.

10. A device in accordance with claim 9,
**characterised in that**
the cooling jacket (6) and/or the cover (19) has/have cooling fins (20) which form cooling channels (21) for the coolant.

11. A device in accordance with claim 10,
**characterised in that**
the cooling channels (21) run radially outwards from the pump wheel (17) roughly in the form of a spiral.

12. A device in accordance with claim 11,
**characterised in that**
that coolant outlet connector (5) is positioned radially on the outside of the cooling chamber.

13. A device in accordance with one of the preceding claims,
**characterised in that**
the heat generating chamber (2) is filled with a viscous medium, the rotor (13) and the cooling jacket (6) together form at least one operating gap (14) in which the heat is generated by means of liquid friction.

## Revendications

1. Dispositif de chauffage pour véhicule automobile avec un moteur à combustion et un circuit de refroidissement, le dispositif de chauffage (1) comprenant une chambre de production de chaleur (2) avec une enveloppe réfrigérante (6) entourée par le réfrigérant et un rotor (13) tournant dans la chambre de production de chaleur (2) et fixé sur un arbre d'entraînement (9) et l'enveloppe de refroidissement (6) étant une partie d'une chambre de refroidissement (3) avec une tubulure d'entrée de réfrigérant (4) et une tubulure de sortie de réfrigérant (5), **caractérisé en ce qu'**une roue de pompe (17) entraînée par l'arbre d'entraînement (9) pour la circulation du réfrigérant est disposée dans la chambre de refroidissement (3).

2. Dispositif selon la revendication 1, **caractérisé en ce que** l'enveloppe de refroidissement (6) présente un évasement (15) central, disposé sur le même axe que l'arbre d'entraînement (9), à l'extérieur duquel est disposée la roue de pompe (17) et à l'intérieur duquel est disposé un bout d'arbre (9c) de l'arbre d'entraînement (9).

3. Dispositif selon la revendication 1 ou 2, **caractérisé en ce que** la roue de pompe (17) peut être entraînée de façon magnétique par le bout d'arbre (9c).

4. Dispositif selon la revendication 3, **caractérisé en ce que** des aimants permanents (16) sont fixés sur le pourtour du bout d'arbre (9c).

5. Dispositif selon la revendication 3 ou 4, **caractérisé en ce que** la roue de pompe (17) présente un moyeu (17a) logé de façon rotative sur l'évasement (15, 15a), dans lequel sont fixés des aimants permanents (18) répartis sur le pourtour.

6. Dispositif selon la revendication 3 ou 4, **caractérisé en ce que** la roue de pompe (17) est à base d'une matière synthétique magnétisable.

7. Dispositif selon l'une quelconque des revendications 1 à 6, **caractérisé en ce que** la roue de pompe (17, 17a, 17b) est conçue comme un rotor axial/radial et la tubulure d'entrée de réfrigérant (4) est disposée sur le même axe que l'arbre d'entraînement (9).

8. Dispositif selon l'une quelconque des revendications 2 à 7, **caractérisé en ce que** l'évasement (15, 15a) est à base d'un matériau non magnétisable.

9. Dispositif selon l'une quelconque des revendications 1 à 8 , **caractérisé en ce que** la chambre de refroidissement (3) est formée par l'enveloppe de refroidissement (6) et un couvercle (19) et conçue comme un transmetteur de chaleur.

10. Dispositif selon la revendication 9, **caractérisé en ce que** l'enveloppe de refroidissement (6) et/ou le couvercle (19) présente des nervures de refroidissement (20), qui forment des canaux de refroidissement (21) pour le réfrigérant.

11. Dispositif selon la revendication 10, **caractérisé en ce que** les canaux de refroidissement (21) sont agencés à peu près en forme de spirale depuis la roue de pompe (17) radialement vers l'extérieur.

12. Dispositif selon la revendication 11, **caractérisé en ce que** la tubulure de sortie de réfrigérant (5) est disposée radialement à l'extérieur sur la chambre de refroidissement.

13. Dispositif selon l'une quelconque des revendications précédentes, **caractérisé en ce que** la chambre de production de chaleur (2) est remplie d'un fluide visqueux, **en ce que** le rotor (13) forme avec l'enveloppe de refroidissement (6) au moins une fente de travail (14) par laquelle la chaleur est générée par le frottement du liquide.
